(19) Europäisches Patentamt
European Patent Office
Office européen des brevets

(11) Veröffentlichungsnummer : **0 162 261**
**B1**

# (12) EUROPÄISCHE PATENTSCHRIFT

(45) Veröffentlichungstag der Patentschrift : **19.08.87**

(51) Int. Cl.[4] : **C 08 G 18/38**, C 10 M151/04, C 10 M173/02

(21) Anmeldenummer : **85104252.3**

(22) Anmeldetag : **09.04.85**

## (54) Schwefelhaltige Polyetherurethane, Verfahren zu ihrer Herstellung und ihre Verwendung.

(30) Priorität : **21.04.84 DE 3415178**

(43) Veröffentlichungstag der Anmeldung : **27.11.85 Patentblatt 85/48**

(45) Bekanntmachung des Hinweises auf die Patenterteilung : **19.08.87 Patentblatt 87/34**

(84) Benannte Vertragsstaaten : **BE DE FR GB IT NL**

(56) Entgegenhaltungen : **Keine Entgegenhaltungen**

(73) Patentinhaber : **BAYER AG**
**Konzernverwaltung RP Patentabteilung**
**D-5090 Leverkusen 1 Bayerwerk (DE)**

(72) Erfinder : **Hentschel, Karl-Heinz, Dr.**
**Heckschenstrasse 89**
**D-4150 Krefeld 10 (DE)**
Erfinder : **Kussi, Siegfried**
**Brandenburger Strasse 43**
**D-5090 Leverkusen 1 (DE)**
Erfinder : **Botsch, Hansjürgen, Dr.**
**Saarstrasse 41**
**D-5090 Leverkusen 1 (DE)**

**EP 0 162 261 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue schwefelhaltige Polyurethane, ein Verfahren zu ihrer Herstellung und ihre Verwendung als verschleißmindernde, wasserlösliche Zusätze in wäßrigen Schmierstoff-Formulierungen, z. B. wasserhaltigen Hydraulikflüssigkeiten, wie sie nach dem 5. Luxemburger Bericht vom 15. November 1974 bekannt sind, beispielsweise Hydraulikflüssigkeiten der Typen HF-C oder HF-A, oder in Wasser verdünnbaren Kühlschmierstoff-Konzentraten zur spanlosen und spangebenden Metallformung.

Unter HF-C-Flüssigkeiten sind Schmierstoff-Formulierungen, z. B. auf Basis wäßriger Polymer-Lösungen mit mindestens 35 Gew.-% Wasser, für einen Betriebstemperaturbereich von — 20 und + 60 °C zu verstehen. Hierbei handelt es sich bei den wasserlöslichen Polymeren im allgemeinen um Polyetherverbindungen mit einem mittleren Molekulargewicht von 350 bis 200 000, wie Polyalkylenglykole, insbesondere Polyethylenglykole, Polypropylenglykole, Poly-(ethylenoxid-co-propylenoxid)-copolymerdiole, Polyalkylenglykolester und Polyalkylenglykolamide.

HF-A-Flüssigkeiten sind Öl-in-Wasser-Emulsionen oder wäßrige Lösungen mit einem brennbaren Anteil von höchstens 20 % für einen Betriebstemperaturbereich von + 5 bis + 65 °C. Bei den brennbaren Anteilen handelt es sich um Korrosionsinhibitoren für die flüssige Phase und die darüber entstehende Dampfphase sowie um schmierfilmverbessernde Additive.

Kühlschmierstoffkonzentrate sind wasserverdünnbare Stoffgemische aus Korrosionsinhibitoren, schmierfilmverbessernden Additiven, Emulgatoren und Mineral- oder Syntheseölen.

HF-A- und/oder HF-C-Flüssigkeiten werden beispielsweise für die hydraulische Kraftübertragung und Steuerung von Pumpen, Stanzen und Pressen im Bergbau, in Trocknern und Öfen der keramischen Industrie, in Heißwalzanlagen, in Öffnungs- und Verschlußvorrichtungen für Heiz- und Schmelzöfen, in Spritzgußapparaturen und in Förderanlagen und Kränen für Heißzonen verwendet. Beim praktischen Einsatz insbesondere der HF-C-Flüssigkeiten tritt sehr leicht vorzeitig ein Verschleiß des Hydrauliksystems, beispielsweise an besonders beanspruchten Teilen der Hydraulikpumpe, auf.

Wasserhaltige Kühlschmierstoffe kommen in der Regel als 1- bis 5-prozentige Emulsionen bzw. Lösungen bei der spanlosen und spangebenden Metallformung, beispielsweise beim Drehen, Fräsen, Bohren, Schleifen (spangebende Bearbeitung) oder beim Walzen, Ziehen usw. (spanlose Bearbeitung) zum Einsatz.

Der Zusatz handelsüblicher Verschleißschutzzusätze, wie sie sich in Schmierölen auf Mineralölbasis besonders bewährt haben, wie z. B. Zinkdialkyldithiophosphate (EP-A 0 054 804), ist wegen deren geringen Löslichkeiten in Wasser bei den wäßrigen Hydraulikflüssigkeiten nicht befriedigend möglich.

Im Hinblick auf eine bessere biologische Abbaubarkeit der HF-A- bzw. HF-C-Hydraulikflüssigkeiten oder wasserhaltigen Kühlschmierstoffe in Kläranlagen sind zudem schwermetallfreie, wasserlösliche Verschleißschutzzusätze wünschenswert.

Für den genannten Anwendungsbereich ist außerdem noch die Verwendung von Diethanoldisulfid bekannt (DE-A 3 008 500) ; diese Verbindung ist jedoch sehr flüchtig und weist einen starken Geruch auf.

Es wurden neue mit Wasser mischbare Polyurethane gefunden, die erhältlich sind durch eine Polyadditionsreaktion aromatischer, cycloaliphatischer und/oder aliphatischer Polyisocyanate mit

a) 30 bis 95 Mol-% eines oder mehrerer schwefelverbrückter aliphatischen Dialkohole der Formel (I)

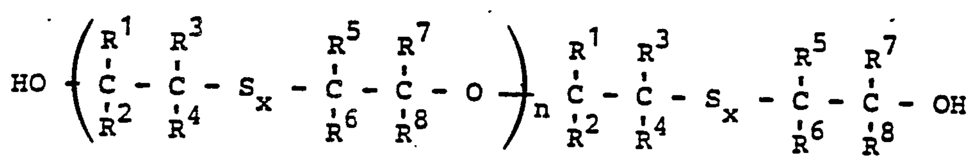

in der

$R^1$ bis $R^8$ gleich oder verschieden sind und Wasserstoff oder einen Alkylrest mit 1 bis 10 Kohlenstoffatomen bedeuten,

n für eine Zahl von 0 bis 20 steht und

x eine Zahl zwischen 1,5 und 4 (mittlere Anzahl der Schwefelatome) bedeutet,

in Gegenwart von

b) 1,4 bis 20 Mol-% eines Polyethylenglykols und/oder

c) 4,6 bis 70 Mol-% eines mindestens eine anionische Gruppe tragenden Dialkohols und/oder mindestens eines eine anionische Gruppe tragenden Mono- oder Diamins, und

d) 0 bis 40 Mol-% sonstiger cycloaliphatischer, araliphatischer oder heterocyclischer Dialkohole und/oder aromatischer, cycloaliphatischer oder araliphatischer Diamine, die gegebenenfalls unter 20 Mol-% Monoamine enthalten können, wobei die Summe von a) bis d) 100 Mol-% ergibt.

Überraschenderweise tritt in wäßrigen Hydraulikflüssigkeiten, die solche schwefelbrückenhaltige Polyurethane enthalten, sogar in wäßrigen Lösungen dieser Polyurethane, Verschleiß nur in sehr geringem Umfang auf. Eine gebräuchliche tribologische Meßmethode auf Verschleiß ist die Reibverschleißwaage nach Feichert, wie sie von E. H. Kadmer u. a. in Mineralöltechnik 3, H.2 (1958) beschrieben ist. Hierbei wird mit einer Anfangsbelastung von 15 N eine fest eingespannte Zylinderrolle gegen einen umlaufenden gehärteten, in die Schmiermitteltestflüssigkeit eintauchenden Stahlring gepreßt. Nach einem Verschleißweg von 100 m wird die Größe der auf der Zylinderrolle eingegrabenen Verschleißkalottenfläche (in $mm^2$) und die an dieser Verschleißkalottenfläche nach 100 m Verschleißweg aufliegende Flächenpressung (« spezifische Belastbarkeit ») (in $N/cm^2$) bestimmt. Je besser das Verschleißverhalten, desto geringer fällt die Verschleißkalottenfläche und desto höher die spezifische Belastbarkeit aus. Die erfindungsgemäßen schwefelverbrückten Polyurethane enthaltende Testflüssigkeiten ergeben überraschenderweise beim Test in der Reibverschleißwaage sehr niedrige Verschleißkalottenflächen und sehr hohe spezifische Belastbarkeiten. Darüber hinaus treten in wäßriger Lösung mit den erfindungsgemäßen Polyurethanen auch nach längeren Gebrauchszeiten im Gegensatz zu handelsüblichen wasserlöslichen Extreme-Pressure-Additiven keine großen Probleme auf. Infolge ihrer ausgezeichneten Wasserlöslichkeit lassen sich die erfindungsgemäßen Polyurethane problemlos zu wasserlöslichen schwerentflammbaren Hydraulikflüssigkeits-Zusammensetzungen zudosieren.

Im Rahmen der schwefelverbrückten aliphatischen Dialkohole bedeutet Alkyl einen geradkettigen oder verzweigten Kohlenwasserstoffrest mit 1 bis 10, bevorzugt 1 bis etwa 6, Kohlenstoffatomen. Beispielsweise seien die folgenden Alkylreste genannt : Methyl, Ethyl, Propyl, Isopropyl, Butyl, Isobutyl, Pentyl, Isopentyl, Hexyl und Isohexyl. Insbesondere bevorzugt ist Methyl und Ethyl.

Die Schwefelbrücke ist durch das Vorliegen von —S—S-Bindungen gekennzeichnet. Die mittlere Anzahl der Schwefelatome in der Brücke beträgt 1,5 bis 4,0, bevorzugt 1,9 bis 3,1.

Die schwefelverbrückten aliphatischen Dialkohole sind an sich bekannt (Methoden der organischen Chemie (Houben-Weyl), Bd. 9, Georg Thieme-Verlag, Stuttgart, 1955, Seiten 55-92). Sie können beispielsweise durch Umsetzung der entsprechenden Alkalipolysulfide mit Chlorhydrinverbindungen oder mit Epoxiden oder aber gemäß der DE-B 1 098 937 aus den entsprechenden Epoxiden, Schwefelwasserstoff und Schwefel leicht hergestellt werden. Es kann sich dabei auch um eine Mischung einer Reihe analoger Dialkohole mit steigender Anzahl von Schwefelatomen in der Schwefelbrücke handeln.

Beispielsweise seien die folgenden schwefelverbrückten aliphatischen Dialkohole genannt : 3-Thiapentandiol-1,5 (auch Thiodiglykol genannt, mitverwendet neben Dialkoholen mit längerer $S_x$-Brücke), 3,4-Dithiahexandiol-1,6 (auch Dithiodiglykol genannt), 3,4,5-Trithiaheptandiol-1,7, 3,4,5,6-Tetrathiaoctandiol-1,8, 4-Thia-heptandiol-2,6, 2-Methyl-3-thiahexandiol-1,5, 2,4-Dimethyl-3-thiapentandiol-1,5, 4,5-Dithiaoctandil-2,7, 2-Methyl-3,4-dithiaheptandiol-1,6, 2,5-Dimethyl-3,4-dithiahexandiol-1,6, 4,5,6-Trithianonandiol-2,8, 2-Methyl-3,4,5-trithiaoctandiol-1,7, 2,6-Dimethyl-3,4,5-trithiaheptandiol-1,7, 4,5,6,7-Tetrathiadecandiol-2,9, 2-Methyl-3,4,5,6-tetrathiandion-diol-1,8 und 2,7-Dimethyl-3,4,5,6-tetrathiaoctandiol-1,8.

Im Rahmen der vorliegenden Erfindung können anstelle der monomeren schwefelverbrückten aliphatischen Dialkohole ($n = 0$) auch die entsprechenden Oligomeren ($n > 0$) eingesetzt werden. Die Oligomeren erhält man durch Kondensation der monomeren schwefelverbrückten Dialkohole in Gegenwart von sauren Katalysatoren.

Besonders bevorzugt sind jedoch die monomeren schwefelverbrückten Dialkohole ($n = 0$).

Polyisocyanate als Ausgangskomponenten im Rahmen der Erfindung können aliphatische, cycloaliphatische, araliphatische, aromatische und heterocyclische Polyisocyanate sein, wie sie z. B. von W. Siefken in Justus Liebigs Annalen der Chemie, 562, Seiten 75 bis 136, beschrieben werden, beispielsweise solche der Formel

$$A(NCO)_m \qquad (II),$$

in der

m = 2 bis 4, vorzugsweise 2, und

A einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen,

bedeuten, z. B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage : Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-A 874 430 und 848 671 beschrieben werden, m- und p-Isocyanatophenylsulfonyl-isocyanate gemäß der US-A 3 454 606, perchlorierte Arylpolyisocyanate, wie sie z. B. in der DE-B 1 157 601 (US-A 3 277 138) beschrieben werden, Carbodiimidgruppen aufweisende Polyisocyanate, wie sie in der DE-B 1 092 007 (US-A 3 504 400, 2 537 685 und 2 552 250 beschrieben werden, Norbornan-Diisocyanate gemäß US-A 3 492 330, Allophanatgruppen aufweisende Polyisocyanate, wie sie z. B. in der GB-A 994 890, der BE-A 761 626 und der NL-A 7 102 524 beschrieben werden, Isocyanuratgruppen aufweisende Polyisocyanate, wie sie z. B. in der US-A 3 001 973, in den DE-B 1 022 789, 1 222 067 und 1 027 394 sowie in den DE-A 1 929 034 und 2 004 048 beschrieben werden, Urethangruppen aufweisende Polyisocyanate, wie sie z. B. in der BE-A 752 261 oder in den US-A 3 394 164 und 3 644 457 beschrieben werden, acylierte Harnstoffgruppen aufweisende Polyisocyanate gemäß der DE-B 1 230 778, Biuretgruppen aufweisende Polyisocyanate, wie sie z. B. in den US-A 3 124 605, 3 201 372 und 3 124 605 sowie in der GB-A 889 050 beschrieben werden, durch Telomerisationsreaktionen hergestellte Polyisocyanate, wie sie z. B. in der US-A 3 654 106 beschrieben werden, Estergruppen aufweisende Polyisocyanate, wie sie z. B. in der GB-A 3 567 763 und in der DE-B 1 231 688 genannt werden, Umsetzungsprodukte der obengenannten Isocyanate mit Acetalen gemäß der DE-B 1 072 385 und polymere Fettsäureester enthaltende Polyisocyanate gemäß der US-A 3 455 883.

Es ist auch möglich, die bei der technischen Isocyanatherstellung anfallenden, isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren (« TDI »), insbesondere Polyphenylpolymethylenpolyisocyanate, wie sie durch Anilin-Formaldehyd-Kondensation und anschließende Phosgenierung hergestellt werden (« rohes MDI ») und Carbodiimidgruppen, Urethangruppen, Allophanatgruppen, Isocyanuratgruppen, Harnstoffgruppen oder Biuretgruppen aufweisende Polyisocyanate (« modifizierte Polyisocyanate »), insbesondere solche modifizierten Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Als Polyisocyanat- bzw. Diisocyanatkomponente kommen auch Prepolymere mit Isocyanatendgruppen in Frage, in einfachsten Falle (2 : 1)-Addukte von Isocyanaten an die genannten schwefelverbrückten Dialkohole, Polyethylenglykole und/oder sonstigen Dialkohole.

Insbesondere bevorzugt sind jedoch als überwiegende Polyisocyanatkomponente (zu mehr als 50 Mol%) Diisocyanate der Formel

$$B(NCO)_2 \qquad (III),$$

in der

B einen aliphatischen Kohlenwasserstoffrest mit 6 bis 10 Kohlenstoffatomen, einen cycloaliphatischen Kohlenwasserstoffrest mit 5 bis 10 Kohlenstoffatomen oder einen aromatischen Kohlenwasserstoffrest mit 6 bis 13 Kohlenstoffatomen bedeutet.

Beispielsweise seien die folgenden Diisocyanate genannt : 1,6-Diisocyanatohexan, 1,10-Diisocyanatodecan, 1,2-Diisocyanatodecan, 1,6-Diisocyanatotrimethylhexan, 1,3-Diisocyanatocyclohexan, 1,4-Diisocyanatocyclohexan, 1,3-Bis-(isocyanatomethyl)-cyclohexan, 1,4-Bis-(isocyanatomethyl)-cyclohexan, Isophorondiisocyanat, 2,2-Bis-(4-isocyanatocyclohexyl)-propan, Bis-(4-isocyanatocyclohexyl)-methan, 4,4'-Diisocyanatodicyclohexan, 2,4-Toluylendiisocyanat, 2,6-Toluylendiisocyanat, 1,3-Phenylendiisocyanat, 1,4-Phenylendiisocyanat, Bis-(4-diisocyanatophenyl)-methan, 2,2-Bis-(4-isocyanatophenyl)-propan, 4,4'-Diisocyanatodiphenyl, 1,5-Naphthylendiisocyanat und 2,6-Naphthylendiisocyanat.

Polyethylenglykole im Rahmen der vorliegenden Erfindung können durch Polykondensation von Ethylenglykol in an sich bekannter Weise hergestellte Polymere sein (Ullmanns Encyklopädie der technischen Chemie, 4. Auflage, Bd. 19, Verlag Chemie, 1980, Weinheim, S. 31-38) mit einer mittleren Molmasse im Bereich von etwa 600 bis etwa 6 000, bevorzugt von etwa 600 bis etwa 4 000.

Polyethylenglykole im Rahmen der vorliegenden Erfindung können auch Copolymerisatglykole des Ethylenoxids mit anderen niederen Epoxiden und/oder mit Tetrahydrofuran sein, sofern nur geringe Anteile des zweiten Epoxids eingebaut sind und dadurch die Wasserlöslichkeit des Polyethylenglykols nicht beeinträchtigt wird. Beispielsweise können solche Copolymerisate mindestens 40 Mol-% Ethylenoxid-Einheiten neben $C_3$-$C_6$-Einheiten oder Tetrahydrofuran-(Tetramethylenoxy)-Einheiten, bevorzugt mindestens 50 Mol-% und ganz besonders bevorzugt mindestens 90 Mol-% Ethylenoxid-Einheiten einpolymerisiert enthalten. Als niedere Glykole neben dem Ethylenglykol seien beispielsweise genannt : 1,2-Propylenglykol, 1,4-Butandiol und 1,4-Cyclohexandimethanol.

Dialkohole und Diamine, die durch anionische Gruppen substituiert sein können, können Verbindungen der Formeln

$$R^{10}(OH)_2 \text{ oder } R^{10}(NH_2)_2 \qquad (IV)$$

in denen

$R^{10}$ einen niederen aliphatischen Kohlenwasserstoffrest oder einen aromatischen Rest bedeutet, der zusätzlich noch anionische funktionelle Gruppen trägt, sein.

Als niedere aliphatische Kohlenwasserstoffreste seien hierbei solche mit 1 bis etwa 6 Kohlenstoffatomen genannt. Beispiele hierfür sind Methylen, Ethylen, Propylen, Isopropylen, Butylen, Isobutylen,

Pentylen, Isopentylen, Hexylen und Isohexylen.

Als aromatische Reste seien hierbei bevorzugt Phenylen, Naphthylen und Biphenylen genannt.

In Frage kommen selbstverständlich auch araliphatische, alkylaromatische oder cycloaliphatische Reste, sowie Reste, die sich aus solchen Dialkoholen oder Diaminen durch Anpolymerisation von Epoxiden, wie Ethylenoxid oder Propylenoxid, ergeben.

Als anionische Gruppen seien hier die Sulfonat-, die Carboxylat- und die Phosphonat-Gruppe genannt. Die Dialkohole bzw. Diamine sind im allgemeinen durch 1 bis 10, bevorzugt 1 bis 3 anionische Gruppen substituiert. Beispielsweise seien die folgenden Dialkohole und Diamine, die durch anionische Gruppen substituiert sind, genannt: Natrium-butandiol-1,4-sulfonat-3, Additionsprodukte von Ethylenoxid oder Propylenoxid (oder höheren Epoxiden) an dieses Diol, Natrium-3-hydroxy-2-ethyl-2-hydroxymethylpropionat sowie Epoxidadditionsprodukte davon, Natrium-2-(2-aminoethylamino)-ethylsulfat, Natrium-2,6-diaminohexanoat, Natrium-2,4-diaminobenzoat, Natrium-2,5-diaminobenzolsulfonat, Epoxidadditionsprodukte an Natrium-4,6-dihydroxynaphthalin-2-sulfonat oder an Natrium-3,6-dihydroxynaphthalin-2-sulfonat.

Als sonstige Dialkohole oder Diamine seien Verbindungen der Formeln

$$D(OH)_2 \quad \text{oder} \quad D(\overset{R^9}{\overset{|}{N}}-H)_2 \qquad (V)$$

genannt, in der

$R^9$ Wasserstoff oder eine Alkylgruppe mit 1-6 Kohlenstoffatomen,

D einen niederen aliphatischen, cycloaliphatischen, aromatischen, araliphatischen, alkylaromatischen, heterocyclischen oder einen von einem Polyalkylenoxid abgeleiteten Rest bedeutet.

Aliphatische Reste sind hierbei geradkettige oder verzweigte Kohlenwasserstoffreste mit 1 bis etwa 20 Kohlenstoffatomen. Beispielsweise seien die folgenden aliphatischen Reste genannt: Methylen, Ethylen, Propylen, Isopropylen, Butylen, Isobutylen, Pentylen, Isopentylen, Hexylen, Isohexylen und Dodecylen.

Cycloaliphatische Reste können hierbei mono- oder polycyclische Kohlenwasserstoffreste mit 5 bis 20 Kohlenstoffatomen sein. Beispielsweise seien die isomeren Cyclopentylene und Cyclohexylene genannt, oder auch vom Isophorondiamin oder vom 4,4'-Diamino-dicyclohexylmethan unter Weglassen der Aminogruppen erhaltene zweiwertige Reste.

Aromatische Reste können hierbei Reste aus der Benzolreihe mit 6 bis 20 Kohlenstoffatomen sein. Beispielsweise seien genannt: 1,2-, 1,3- oder 1,4-Phenylen, Naphthylene, zweiwertige, von Biphenyl abgeleitete Reste.

Araliphatische Reste können hierbei durch aromatische Reste substituierte aliphatische Reste sein, wobei der aliphatische Teil ein geradkettiger oder verzweigter Kohlenwasserstoffrest mit 1 bis 6 Kohlenstoffatomen und der aromatische Teil ein Rest aus der Benzolreihe (6 bis etwa 12 Kohlenstoffatome), bevorzugt Phenyl, ist. Beispielsweise seien die folgenden araliphatischen Reste genannt: 1-Phenylethan-1,2-diyl, 1,2-Diphenylethan-4,4'-diyl, 2,2-Diphenylpropan-4,4'-diyl, Diphenylmethan-4,4'-diyl.

Alkylaromatische Reste können hierbei durch aliphatische Reste mit jeweils 1-6 Kohlenstoffatomen substituierte aromatische Reste der Benzolreihe (mit je 6-12 Kohlenstoffatomen) sein. Beispielsweise seien die folgenden alkylaromatischen Reste genannt:

2,4-Tolylen, 2,6-Tolylen, zweiwertige Xylylenreste mit Verknüpfungsstellen (freien Wertigkeiten) am aromatischen Ring und/oder an den seitenständigen aliphatischen Kohlenstoffatomen.

Heterocyclische Reste können hierbei 5- oder 6-gliedrige cyclische Reste sein, die im Ring außer Kohlenstoff noch andere Heteroatome, bevorzugt Sauerstoff, Schwefel oder Stickstoff enthalten. Bevorzugt enthalten die heterocyclischen Reste ein oder zwei der Heteroatome. Beispielsweise seien die folgenden heterocyclischen Reste genannt:

Pyridindiyl, Pyrimidindiyl, Furan-2,5-dimethylen, Thiophen-2,5-dimethylen, Tetrahydrofuran-2,5-dimethylen.

Von einem Polyalkylenoxid abgeleitete Reste können alkoxylierte vorgenannte zweiwertige Reste sein oder aber α,ω-Polyalkylenoxiddiyle, wie α,ω-Polyethylenoxiddiyl oder α,ω-Polypropylenoxiddiyl.

Als sonstige Dialkohole oder Diamine seien beispielsweise genannt: Aliphatische Dialkohole, wie Ethylenglykol, Diethylenglykol, Triethylenglykol, Propylenglykol, Dipropylenglykol, Tripropylenglykol, Polypropylenglykole, Butandiol-1,4, Hexandiol-2,5, Hexandiol-1,6, Decandiol-1,10, Dodecandiol-1,12, Octadecandiol-1,18 und Neopentylglykol, cycloaliphatische Dialkohole, wie Cyclohexandiole, Cyclohexandimethanol, 4,4'-Dihydroxydicyclohexyl, Bis-(4-hydroxycyclohexyl)-methan, 2,2-Bis-(4-hydroxycyclohexyl)-propan, aromatische Dialkohole wie mit geringen, jedoch mindestens äquivalenten Mengen Ethylenoxid und/oder Propylenoxid alkoxylierte Bisphenole, aliphatische Diamine, wie Ethylendiamin, N,N'-Dimethyl-ethylendiamin, Propylendiamin, Hexamethylendiamin und 1,12-Diaminododecan, cycloaliphatische Diamine, wie 1,4-Diaminocyclohexan, 1,4-Bis-(aminomethyl)-cyclohexan, Bis-(4-aminocyclohexyl)-methan, 2,2-Bis-(4-aminocyclohexyl)-propan, Isophorondiamin und α,ω-Diamino-polyethylenoxid.

Daneben ist es möglich, in untergeordneten Mengen, d. h. unter 20 Mol-% des Anteils sonstiger Dialkohole oder Diamine, auch Monoamine mitzuverwenden, wie beispielsweise n-Butylamin, Diethylamin oder Anilin.

Die erfindungsgemäßen Polyurethane werden durch Umsetzung von etwa äquivalenten Mengen, bevorzugt 85 bis 115 Mol-%, der Polyisocyanate, bevorzugt nur von Diisocyanaten, mit den folgenden Verbindungen hergestellt :

(a) 30 bis 95 Mol-%, bevorzugt 40 bis 70 Mol-%, des schwefelverbrückten Dialkohols
(b) 1,4 bis 20 Mol-%, bevorzugt 1,4 bis 10 Mol-%, des Polyethylenglykols, und/oder
(c) 4,6 bis 70 Mol-%, bevorzugt 4,6 bis 55 Mol-%, des anionische Gruppen tragenden Dialkohols oder Mono- oder Diamins und
(d) 0 bis 40 Mol-%, bevorzugt 0 bis 20 Mol-%, sonstiger Dialkohole oder Diamine, wobei die Summe von a) bis d) 100 Mol-% ergibt.

Die mittlere Molmasse der erfindungsgemäßen Polyurethane, die sich beispielsweise aus den Hydroxylzahlen errechnen läßt, liegt im Bereich von 800 bis 100 000. Bevorzugt werden Polyurethane mit einer mittleren Molmasse im Bereich von 1 000 bis 8 000.

Die Herstellung der erfindungsgemäßen Polyurethane erfolgt analog zu den an sich bekannten Polyurethansynthesen (Ullmanns Encyclopädie der technischen Chemie, 4. Auflage, Verlage Chemie, Weinheim 1980, Bd. 19, S. 309-310).

Mit oder ohne Lösungsmittel werden die Reaktanten in Anwesenheit eines geeigneten Katalysators umgesetzt.

Als Lösungsmittel seien inerte Lösungsmittel, die keinen Zerewitinoff-aktiven Wasserstoff enthalten, genannt. Als Lösungsmittel seien beispielsweise genannt Aceton, Methylethylketon, N,N-Dimethylformamid, N,N-Dimethylacetamid, N-Methylpyrrolidon, Tetrahydrofuran und 1,4-Dioxan. Besonders bevorzugt werden niedrigsiedende wasserlösliche Lösungsmittel wie Aceton, Methylethylketon, Tetrahydrofuran und Dioxan. Es können jedoch auch niedrigsiedende unpolare nichtprotische Lösungsmittel verwendet oder mitverwendet werden, sofern sie die erfindungsgemäßen Polyurethane lösen und mit Wasser beim Abdestillieren azeotrope Gemische bilden. Beispiele hierfür sind Benzol, Toluol und Xylol.

Die Polyadditionsreaktion wird im allgemeinen im Temperaturbereich von 0 bis 250 °C, bevorzugt 40 bis 140 °C, durchgeführt.

Die Polyadditionsreaktion wird im allgemeinen bei Normaldruck durchgeführt ; es ist jedoch auch möglich das Verfahren bei einem Über- oder Unterdruck (beispielsweise im Druckbereich von 0,01 bis 100 bar, bevorzugt 0,5 bis 5 bar) durchzuführen.

Als Katalysatoren für die Additionsreaktion der Polyisocyanate an die Diole können dem Fachmann bekannte metallorganische Verbindungen dienen wie z. B. Di-n-octylzinn-mercaptid, Zinn(II)-acetat, Zinn(II)-octoat, Zinn(II)-ethylhexanoat, Zinn(II)-laurat, Dibutylzinnoxid, Dibutylzinndichlorid, Dibutylzinndiacetat, Dibutylzinndilaurat, Dioctylzinndiacetat, aber auch aminische Verbindungen, wie tertiäre aliphatische Amine, monocyclische oder bicyclische Amidine, Etheramine, Mannichbasen, Silamine, Tetralkylaminohydroxide, Hexahydrotriamine, Lactame, Azalactame, Aminopyridine, Hydrazinopyridine, usw. Die Katalysatoren werden im allgemeinen in einer Menge von 0,001 bis 10 Gew.-%, bezogen auf die Gesamtmenge der Reaktanten mit mindestens 2 gegenüber Isocyanaten reaktionsfähigen Wasserstoffatomen eingesetzt.

Die erfindungsgemäßen schwefelhaltigen Polyurethane können als Verschleißschutz-Additive in wäßrigen Hydraulikflüssigkeiten vom Typ HF-A, HF-C und mit Wasser verdünnbaren Kühlschmierstoff-Konzentraten zur spanlosen oder spangebenden Metallformung verwendet werden.

Im allgemeinen werden sie in Mengen von 1 bis 10 Gew.-Teilen, bevorzugt 2 bis 5 Gew.-Teilen, bezogen auf 100 Gew.-Teile des Fluids eingesetzt.

Bevorzugte Hydraulikflüssigkeiten, die erfindungsgemäße Polyurethane enthalten können, sind wäßrige Polymerlösungen, die als Verdickungskomponente Polyalkylenglykole, Polyalkylenglykolester, Polyalkylenglykolamide oder Polyacrylate enthalten und die beispielsweise folgende Zusammensetzung haben können :

40 bis 80 Gew.-Teile Wasser,
5 bis 15 Gew.-Teile monomere Glykole, vorzugsweise Ethylenglykol,
5 bis 10 Gew.-Teile oligomere Glykole, vorzugsweise Di- oder Tripropylenglykol,
5 bis 15 Gew.-Teile polymere Glykole, vorzugsweise tri- oder tetrafunktionelle Ethylenoxid-Propylenoxid-Addukte mit Molekulargewichten im Bereich von 20 000 bis 25 000,
5 bis 10 Gew.-Teile Korrosionsinhibitoren, die sowohl in der wäßrigen als auch in der Dampfphase wirksam sind, vorzugsweise Fettsäurealkanolamide, Arylsulfamidcarbonsäuren, Benzotriazole, Fettaminethoxylate und Morpholin,
2 bis 5 Gew.-Teile des erfindungsgemäßen Verschleißschutz-Additivs.

Für derartige Hydraulikflüssigkeiten und Kühlschmierstoffkonzentrate werden die folgenden er-

findungsgemäßen schwefelhaltigen Polyurethane als Verschleißschutz-Additive besonders bevorzugt: Polyetherurethane aus

a) Toluylendiisocyanaten und/oder Isophorondiisocyanat,
b) Polyethylenglykolen, Molmasse 1 000-3 000,
c) propoxylierten Natrium-butandiol-1,4-sulfonat-3 und/oder Natrium-3-hydroxy-2-ethyl-2-hydroxymethylpropionat sowie
d) 3,4,5-Trithiaheptandiol-1,7 (« Trithiodiethanol »).

Hydraulikflüssigkeiten und Kühlschmierstoffkonzentrate mit den erfindungsgemäßen Verschleißschutz-Additiven haben ein ausgezeichnetes Reibungsverhalten und eine hohe Beständigkeit.

Die vorliegende Erfindung betrifft deshalb auch Verschleißschutz-Additive, die die weiter oben beschriebenen, neuen, mit Wasser mischbaren Polyurethane enthalten, sowie die Verwendung solcher Verschleißschutz-Additive in wäßrigen Hydraulikflüssigkeiten und Kühlschmierstoff-Konzentraten.

## Beispiel 1

In 2 566 g Methylethylketon als Lösungsmittel werden bei Rückflußtemperatur zur Reaktion gebracht (ca. 80 °C) : 258 g (ca. 0,086 Mol) eines vorher entwässerten Polyethylenglykols einer mittleren Molmasse (aus der Hydroxylzahl berechnet) von 3 000, 6 g (ca. 0,014 Mol) eines mit etwa 4,1 Mol Propylenoxid pro Mol propoxylierten Natrium-1,4-dihydroxybut-2-ylsulfonats, 167,4 g (ca. 0,9 Mol) eines zuvor aus Natriumtrisulfid und Ethylenchlorhydrin gewonnenen Trithiodiethanols und 174 g (1 Mol) einer (65 : 35)-Mischung aus 2,4-Toluylendiisocyanat mit 2,6-Toluylendiisocyanat. Nach etwa zweistündiger Nachreaktionszeit bei 80 °C wird die Reaktionslösung unter einem Vakuum von ca. 500-650 mbar zugetropft zu 908 g von ca. 50 °C warmem Wasser, wobei das Lösungsmittel Methylethylketon, vermischt mit etwas Wasser, überdestilliert und schließlich eine klare bräunliche, wäßrige Lösung zurückbleibt mit einem Festgehalt von ca. 28,4 Gew.-%.

Kennzahlen des daraus erhaltenen Feststoffs:
Schwefelgehalt ca. 15,2 Gew.-%,
Hydroxylzahl 97 mg KOH/g,
$M_w$ (durch Lichtstreuung ermittelt) 5 400,
$M_n$ (aus der Hydroxylzahl errechnet) 1 155,
Anzahl der Schwefelatome in dem Dialkohol 3.

## Beispiel 2

In 2 426 g Methylethylketon als Lösungsmittel werden bei Rückflußtemperatur (ca. 80 °C) zur Reaktion gebracht:

219 g (ca. 0,073 Mol) eines vorher entwässerten Polyethylenglykols einer mittleren Molmasse (aus der Hydroxylzahl berechnet) von 3 000, 11,7 g (ca. 0,027 Mol) desselben propoxylierten Diolsulfonats wie bei Beispiel 1, 167,4 g (ca. 0,9 Mol) des in Beispiel 1 näher bezeichneten Trithiodiethanols und 174 g (1 Mol) der in Beispiel 1 näher bezeichneten Toluylendiisocyanat-Mischung.

Nach einer vierstündigen Nachreaktionszeit bei 80 °C wird die erhaltene Reaktionslösung unter einem Vakuum von ca. 0,5-0,65 bar zugetropft zu ca. 5 150 g Wasser bei etwa 60 °C, wobei eine Methylethylketon/Wasser-Mischung überdestilliert und eine gelblich-braune wäßrige Lösung zurückbleibt mit einem Festgehalt von 11,4 Gew.-%.

Kennzahlen des daraus erhaltenen Feststoffs:
Schwefelgehalt ca. 11,4 Gew.-%
Hydroxylzahl 40,5 mg KOH/g,
$M_w$ (durch Lichtstreuung ermittelt) 32 000,
$M_n$ (aus der Hydroxyzahl errechnet) 2 770,
Anzahl der Schwefelatome in dem Dialkohol 3.

## Beispiel 3

Durch Vorlegen von 1 048,9 g Isophorondiisocyanat bei 110 °C und Zutropfen von 3 385,9 g einer 30 %igen toluolischen Lösung des in Beispiel 1 näher beschriebenen propoxylierten Diolsulfonats innerhalb von 2 h unter gleichzeitigem Abdestillieren von Toluol wird ein wasserlösliches Präpolymer mit Isocyanatengruppen mit einem Isocyanatgruppengehalt von 6,32 Gew.-% erhalten, das fein pulverisiert und für dieses und die folgenden Beispiele weiterverwendet wird (« Sulfonatisocyanatpräpolymer »).

Bei 140 °C werden in eine Mischung aus 261 g (0,087 Mol) eines vorher entwässerten Polyethylenglykols einer mittleren Molmasse von 3 000 und 169,8 g (0,913 Mol) des in Beispiel 1 näher bezeichneten Trithiodiethanols 788 g (0,9 Mol) des oben näher beschriebenen Sulfonatisocyanatpräpolymers

portionsweise eingetragen. Nach einer dreistündigen Nachreaktionszeit wird der Kolbeninhalt auf ein Blech mit Aluminiumfolienauskleidung ausgegossen und nach dem Erkalten und Erstarren zerkleinert und pulverisiert zu einem hellbraunen Pulver.

Schwefelgehalt ca. 9,9 Gew.-%,
Hydroxylzahl 49,5 mg KOH/g,
$M_{osm.}$ 1 200,
$M_n$ (aus der Hydroxylzahl) 2 270,
Anzahl der Schwefelatome in dem Dialkohol 3.

Beispiel 4

In analoger Weise zum Beispiel 3 werden 186 g (1 Mol) Trithiodiethanol mit 788 g (0,9 Mol) des in Beispiel 3 näher bezeichneten Sulfonatisocyanatpräpolymers zur Reaktion gebracht und nach einer zweistündigen Nachreaktionszeit in ein gelbbraunes Pulver überführt.

Schwefelgehalt ca. 13,3 Gew.-%,
Hydroxylzahl 67,5 mg KOH/g,
$M_{osm.}$ 950,
$M_n$ (aus der Hydroxylzahl) 1 660,
Anzahl der Schwefelatome in dem Dialkohol 3.

Beispiel 5

Bei 140 °C werden 313,2 g (0,104 Mol) eines vorher entwässerten Polyethylenglykols mit einer mittleren Molmasse von 3 000 und 203,8 g (1,096 Mol) des in Beispiel 1 näher bezeichneten Trithiodiethanols vorgelegt und dazu innerhalb von 2 Stunden 119,9 g (0,54 Mol) Isophorondiisocyanat zugetropft sowie parallel dazu 472,8 g (0,54 Mol) des in Beispiel 3 näher beschriebenen Sulfonatisocyanatpräpolymers portionsweise eingetragen. Nach dreistündiger Nachreaktionsdauer (Erreichen einer NCO-Zahl von 0) wird auf ein aluminiumfolienverkleidetes Blech gegossen, erkalten gelassen und in Brocken zerschlagen. Diese Brocken werden dann in vorgelegtem siedendem Wasser aufgelöst zu einem wäßrigen Konzentrat eines Festgehaltes von 14,2 Gew.-% (gelbbraune Lösung).

Kennzahlen des Feststoffs:
Schwefelgehalt ca. 11,5 Gew.-%,
Hydroxylzahl 94 mg KOH/g,
$M_{osm.}$ 2 300,
$M_n$ (aus der Hydroxylzahl) 1 190,
Anzahl der Schwefelatome in dem Dialkohol 3.

Beispiel 6

Analog zum Beispiel 5 werden umgesetzt 391,5 g (0,131 Mol) des Polyethylenglykols einer Molmasse von 3 000, 254,7 g (1,369 Mol) Trithiodiethanol, 295,5 g (0,913 Mol) des in Beispiel 3 näher bezeichneten Sulfonatisocyanatpräpolymers und 224,8 g (1,013 Mol) Isophorondiisocyanat.

Nach dem Auflösen in Wasser erhält man ein Konzentrat mit einem Festgehalt von 30,2 Gew.-%.

Kennzahlen des Feststoffs:
Schwefelgehalt 10,4 Gew.-%,
Hydroxylzahl 86,5 mg KOH/g,
$M_{osm.}$ 2 000,
$M_n$ (aus der Hydroxylzahl) 1 300,
Anzahl der Schwefelatome in dem Dialkohol 3,0.

Beispiel 7

Analog zu Beispiel 3 werden umgesetzt: 261 g (0,087 Mol) eines vorher entwässerten Polyethylenglykols der mittleren Molmasse 3 000, 155,2 g (0,913 Mol) eines im Molverhältnis (1 : 1) vorliegenden Dithio-/Trithiodiethanol-Gemisches (erhalten durch Umsetzung von Ethylenchlorhydrin mit einem Natriumpolysulfid der Zusammensetzung $Na_2S_{2.5} \times H_2O$) und 788 g (0,9 Mol) des in Beispiel 3 näher beschriebenen Sulfonatisocyanatpräpolymers. Nach vierstündiger Nachreaktionszeit wird der Kolbeninhalt auf ein Blech gegossen, zu Brocken zerkleinert und in Wasser zu einer 44 %igen Lösung aufgelöst.

Kennzahlen des Feststoffs:
Schwefelgehalt 6,6 Gew.-%,
Hydroxylzahl 74 mg KOH/g,
$M_n$ (aus der Hydroxylzahl) 1 515,
Anzahl der Schwefelatome in dem Dialkohol 2,5.

Beispiel 8

Analog zum Beispiel 3 werden umgesetzt : 261 g (0,087 Mol) eines vorher entwässerten Polyethylenglykols der mittleren Molmasse 3 000, 140,6 g (0,913 Mol) Dithiodiethanol (= Bis(2-hydroxyethyl)-disulfid) und 788 g (0,9 Mol) des in Beispiel 3 näher beschriebenen Sulfonatisocyanatpräpolymers. Nach vierstündiger Nachreaktionszeit wird ebenso wie beim Beispiel 7 verfahren und eine 38,5 %ige bräunlichgelbe wäßrige Lösung erhalten.

Kennzahlen des Feststoffs :
Schwefelgehalt des Feststoffs 6,6 Gew.-%,
Hydroxylzahl 63 mg KOH/g,
$M_n$ (aus der Hydroxylzahl) 1 780
Anzahl der Schwefelatome in dem Dialkohol 2,0.

Beispiel 9

Analog zum Beispiel 3 werden umgesetzt : 261 g (0,087 Mol) eines vorher entwässerten Polyethylenglykols der mittleren Molmasse 3 000, 70,3 g (0,4 565 Mol) Bis-(2-hydroxyethyl)-disulfid, 55,7 g (0,4 565 Mol) Bis-(2-hydroxyethyl)-sulfid und 788 g (0,9 Mol) des in Beispiel 3 näher beschriebenen Sulfonatisocyanatpräpolymers. Nach 3-stündiger Nachreaktionszeit und Aufarbeitung wie bei Beispeil 7 resultiert eine 38,3 %ige gelbe, wäßrige Lösung.

Kennzahlen des Feststoffs :
Schwefelgehalt 5,3 Gew.-%,
Hydroxylzahl 95 mg KOH/g
$M_n$ (aus der Hydroxylzahl) 1 180
Anzahl der Schwefelatome in dem Dialkohol 1,5.

Beispiel 10 (Vergleichsversuch)

Analog zum Beispiel 3 werden umgesetzt : 261 g (0,087 Mol) eines vorher entwässerten Polyethylenglykols der mittleren Molmasse 3 000, 111,4 g (0,913 Mol) Bis-(2-hydroxyethyl)-sulfid und 788 g (0,9 Mol) des in Beispiel 3 näher beschriebenen Sulfonatisocyanatpräpolymers. Nach dreistündiger Nachreaktionsdauer und Aufarbeitung wie bei Beispiel 7 resultiert eine 38,8 %ige strohgelbe, wäßrige Lösung.

Kennzahlen des Feststoffs :
Schwefelgehalt 4,3 Gew.-%,
Hydroxylzahl 92 mg KOH/g,
$M_n$ (aus der Hydroxylzahl) 1 220,
Anzahl der Schwefelatome in dem Dialkohol 1,0.

Beispiel 11

Analog zum Beispiel 3 werden umgesetzt : 261 g (0,087 Mol) eines vorher entwässerten Polyethylenglykols der mittleren Molmasse 3 000, 192,6 g (0,913 Mol) eines Polythiodiethanols, das aus $Na_2S_{3,5} \times H_2O$ und Ethylenchlorhydrin erhalten worden war und dem laut der Analyse die mittlere Zusammensetzung $HOC_2H_4—S_{3,7}—C_2H_4—OH$ zukommt, sowie 788 g (0,9 Mol) des in Beispiel 3 näher beschriebenen Sulfonatisocyanatpräpolymers. Nach dreistündiger Nachreaktionsdauer und Aufarbeitung wie bei Beispiel 7 erhält man eine 29,0 %ige braune, wäßrige Lösung.

Kennzahlen des Feststoffs :
Schwefelgehalt 10,1 Gew.-%,
Hydroxylzahl 88 mg KOH/g,
$M_n$ (aus der Hydroxylzahl) 1 275,
x (in der allg. Formel I) 3,7.

Beispiel 12

Analog zum Beispiel 3 werden umgesetzt : 261 g (0,087 Mol) eines vorher entwässerten Polyethylenglykols der mittleren Molmasse 3 000, 195,8 g (0,913 Mol) eines Polythiodiethanols, das aus $Na_2S_4 \cdot \times H_2O$ und Ethylenchlorhydrin erhalten worden war und dem laut der Analyse die mittlere Zusammensetzung $HOC_2H_4—S_{3,8}—C_2H_4OH$ zukommt, sowie 788 g (0,9 Mol) des in Beispiel 3 näher beschriebenen Sulfonatisocyanatpräpolymers. Nach dreistündiger Nachreaktionsdauer und Aufarbeitung wie beim Beispiel 7 erhält man eine 27,9 %ige braune, wäßrige Lösung.

Kennzahlen des Feststoffs :
Schwefelgehalt 10,8 Gew.-%,
Hydroxylzahl 92 mg KOH/g,
$M_n$ (aus der Hydroxylzahl) 1 220,
Anzahl der Schwefelatome in dem Dialkohol 3,8.

## Beispiel 13

Dieses Beispiel zeigt, daß man vorteilhaft auch carboxylatgruppenhaltige Dialkohole in die erfindungsgemäßen Polyetherurethane einbauen kann und die Polyisocyanate auch in blockierter Form zur Umsetzung bringen kann.

Es werden umgesetzt : 261 g (0,087 Mol) eines vorher entwässerten Polyethylenglykols der mittleren Molmasse 3 000, 169,8 g (0,913 Mol) Trithiodiethanol und 736,2 g (0,9 Mol) eines mit Caprolactam blockierten (2 : 1) Addukts von Isophorondiisocyanat an 3-Hydroxy-2-ethyl-2-hydroxymethylpropionsäure (« Dimethylolpropionsäure »). Bei 140 °C werden diese Bestandteile ca. 6 Stunden an Wasserstrahlvakuum gerührt, wobei Caprolactam übergeht. Nach dem Erkalten wird der dunkelbraune Feststoff in wäßriger Natronlauge (30,8 g NaOH pro 1 000 g Harz) gelöst zu einem Konzentrat mit einem Festgehalt von 58,1 Gew.-%.

Kennzahlen des Feststoffs :
Schwefelgehalt : 7,1 Gew.-%
$M_{os}$ 900
Anzahl der Schwefelatome in dem Dialkohol 3,0.

## Beispiel 14

Analog zum Beispiel 3 werden umgesetzt : 261 g (0,087 Mol) eines vorher entwässerten Polyethylenglykols der mittleren Molmasse 3 000, 180, 8 g (0,913 Mol) eines durch Umsetzung von 2 Mol Propylenoxid mit 1 Mol $H_2S$ und 2 Mol Schwefel gemäß der DE-A 1 098 937 erhaltenen « Trithiodipropanols » (= Gemisch aus 4,5,6-Trithianonandiol-2,8, 2-Methyl-3,4,5-trithiaoctandiol-1,7 und 2,6-Dimethyl-3,4,5-trithiaheptandiol-1,7) und 788 g (0,9 Mol) des in Beispiel 3 näher beschriebenen Sulfonatisocyanatprepolymers. Nach etwa vierstündiger Laufzeit bei 140 °C ist die NCO-Zahl auf 0 % NCO gefallen. Durch Verdünnen mit Wasser wird eine Lösung mit einem Festgehalt von 63,8 Gewichtsprozent erhalten.

Schwefelgehalt 6,9 bis 7,01 Gew.-%
Hydroxylzahl 84,5 mg KOH/g
$M_n$ (aus der Hydroxylzahl) 1 310
Anzahl der Schwefelatome in dem Dialkohol 3,0.

## Beispiel 15

Analog zum Beispiel 3 werden umgesetzt : 261 g (0,087 Mol) eines vorher entwässerten Polyethylenglykols der mittleren Molmasse 3 000, 219,1 g (0,913 Mol) eines durch Umsetzung von 2 Mol 1,2-Epoxybutan mit 1 Mol $H_2S$ und 2 Mol Schwefel gemäß der DE-A 1 098 937 erhaltenen Gemisches aus 5,6,7-Trithiaundecandiols-3,9, 2-Ethyl-3,4,5-trithianonandiol-1,7 und 2,6-Diethyl-3,4,5-trithiaheptandiol-1,7 und 788 g (0,9 Mol) des in Beispiel 3 näher beschriebenen Sulfonatisocyanatprepolymers. Nach etwa vierstündiger Reaktionszeit bei 140 °C beträgt die NCO-Zahl 0 %. Durch Verdünnen mit Wasser erhält man eine Lösung mit einem Festgehalt von 65,8 Gewichtsprozent.

Schwefelgehalt 8,23 bis 8,48 Gew.-%
Hydroxylzahl 37 mg KOH/g
$M_n$ (aus der Hydroxylzahl) 3 030
Anzahl der Schwefelatome in dem Dialkohol 3,0.

## Beispiel 16

Analog zum Beispiel 3 werden umgesetzt : 261 g (0,087 Mol) eines vorher entwässerten Polyethylenglykols der mittleren Molmasse 3 000, 425,5 g (0,913 Mol) eines durch Umsetzung von 2 Mol 1,2-Epoxydodecan mit 1 Mol $H_2S$ und 2 Mol Schwefel gemäß der DE-A 1 098 937 erhaltenen Gemischs aus 13,14,15-Trithiaheptacosandiol-11,17, 11-Hydroxymethyl-12,13,14-trithiahexacosanol-16 und 11,15-Bis-(hydroxymethyl)-12,13,14-trithiapentacosan und 788 g (0,9 Mol) des im Beispiel 3 näher beschriebenen Sulfonatisocyanat-Prepolymers. In analoger Weise erhält man durch Verdünnen mit Wasser eine Lösung mit einem Festgehalt von 64,1 Gew.%

Schwefelgehalt 7,16-7,36 Gew.%
Hydroxylzahl 61 mg KOH/g
$M_n$ (aus der Hydroxylzahl) 1 840
Anzahl der Schwefelatome im Dialkohol 3,0.

## Beispiel 17

Analog zum Beispiel 3 werden umgesetzt : 261 g (0,087 Mol) eines entwässerten Polyethylenglykols der Molmasse 3 000 169,8 g (0,913 Mol) Trithiodiethanol (3,4,5-Trithiaheptandiol-1,7) und 701,6 g (0,9 Mol) eines durch Addition von 2 Mol Toluylendiisocyanat (65 Gew.% 2,4- und 35 Gew.% 2,6-Isomer) an 1 Mol des im Beispiel 1 erwähnten Diolsulfonats gewonnenen Sulfonatisocyanat-Prepolymers.

Ausbeute 1 350,6 g (99,4 Gew.%)
Schwefelgehalt 8,62-9,02 Gew.%
Hydroxylzahl 93,5 mg KOH/g
$M_{osm.}$ = 750 (in N,N-Dimethylformamid)
$M_n$ (aus der Hydroxylzahl) 1 200
Anzahl der Schwefelatome im Dialkohol 3,0

Beispiel 18

Die Herstellung läuft praktisch analog zum Beispiel 3 mit zwei Unterschieden : a) als Trithiodiethanol wird ein nach der DE-A 1 098 937 aus 2 Mol Ethylenoxid, 1 Mol $H_2S$ und 2 Mol Schwefel gewonnenes Material verwendet, b) das Sulfonatisocyanat-Prepolymer ist aus dem Diolsulfonat und dem Diisocyanat durch eine Reaktion in Toluol bei 25° (in Gegenwart von 0,2 Gew.% 1,4-Diazabicyclo [2.2.2] octan) hergestellt worden. Durch Verdünnen mit Wasser wurde daraus eine Lösung mit einem Festgehalt von 63,9 Gew.% erhalten.

Schwefelgehalt 10,2-10,7 Gew.%
Hydroxylzahl 96,5 mg KOH/g
$M_{osm.}$ = 2 300
$M_n$ (aus der Hydroxylzahl) 1 163
Anzahl der Schwefelatome im Dialkohol 3,0
Alle Produkte der Beispiele 1 bis 18 sind mit Wasser mischbar und zwar

Beispiel 1 emulgierbar
Beispiel 2 emulgierbar
Beispiel 3 klar löslich
Beispiel 4 klar löslich
Beispiel 5 emulgierbar
Beispiel 6 emulgierbar
Beispiel 7 klar löslich
Beispiel 8 klar löslich
Beispiel 9 klar löslich
Beispiel 10 klar löslich
Beispiel 11 emulgierbar
Beispiel 12 emulgierbar
Beispiel 13 emulgierbar
Beispiel 14 klar löslich
Beispiel 15 klar löslich
Beispiel 16 emulgierbar
Beispiel 17 klar löslich
Beispiel 18 klar löslich

Anwendungsbeispiele

Die folgenden Prüfungen belegen die Verbesserung der Schmierfähigkeit der erfindungsgemäßen schwefelhaltigen Polyurethansysteme als Zusätze zu wasserhaltigen Schmierungsfluiden.

Auf der Almen-Wieland-Prüfmaschine (M. Brunner und R. Pedrini, Schweizer Archiv Annales Suisse, Jg. 21 (1955) Nr. 6, S. 169-177 ; Jg. 21 (1955) Nr. 8, S. 251-257) werden für wäßrige Lösungen der Produkte (Beispiele 1-12) die in Tabelle 1 zusammengefaßten Werte an der Schweißgrenze erhalten.

Beim Reichert-Reibverschleiß-Test (E. Kadmer und H. Denninger, Schmierungstechnik, Jg. 7 (1960) Nr. 5, S. 223-228) wurden bei Verwendung gleicher Testlösungen die in der Tabelle 2 zusammengefaßten Meßergebnisse erhalten.

(Siehe Tabelle 1 Seite 12 f.)

Tabelle 1 : Almen-Wieland-Test

| Beispiel | Mass.-% Prod. in Wasser | Anpreß-kraft (N) | Reibungs-kraft (N) | Temperatur °C |
|---|---|---|---|---|
| - | 0 | 500 | nicht be-stimmbar | 25 |
| 1 | 1<br>2<br>5 | >20 000<br>>20 000<br>>20 000 | 1530<br>1610<br>1170 | 76<br>78<br>74 |
| 2 | 1<br>2<br>5 | >20 000<br>>20 000<br>>20 000 | 1180<br>1160<br>1490 | 65<br>68<br>74 |
| 3 | 1<br>2<br>5 | >20 000<br>>20 000<br>>20 000 | 1350<br>1600<br>1480 | 72<br>93<br>94 |
| 4 | 1<br>2<br>5 | >20 000<br>19 500<br>>20 000 | 1350<br>3500<br>3330 | 76<br>100<br>90 |
| 5 | 1<br>2<br>5 | >20 000<br>>20 000<br>>20 000 | 1950<br>1730<br>2500 | 90<br>86<br>93 |
| 6 | 1<br>2<br>5 | >20 000<br>>20 000<br>>20 000 | 1650<br>1700<br>2300 | 85<br>85<br>90 |
| 7 | 1<br>2<br>5 | >20 000<br>>20 000<br>>20 000 | 1750<br>1650<br>1450 | 87<br>82<br>84 |
| 8 | 1<br>2<br>5 | >20 000<br>>20 000<br>>20 000 | 1650<br>1650<br>1700 | 89<br>85<br>88 |
| 9 | 1<br>2<br>5 | >20 000<br>>20 000<br>>20 000 | 1150<br>1700<br>1750 | 68<br>88<br>89 |
| 10 (zum Vergleich) | 1<br>2<br>5 | 7 000<br>>20 000<br>>20 000 | 1650<br>1950<br>1750 | 66<br>90<br>92 |
| 11 | 1<br>2<br>5 | >20 000<br>>20 000<br>>20 000 | 1200<br>1400<br>1450 | 72<br>71<br>84 |
| 12 | 1<br>2<br>5 | >20 000<br>>20 000<br>>20 000 | 1300<br>1300<br>1400 | 71<br>72<br>83 |

Tabelle 1 : Almen-Wieland-Test (Fortsetzung)

| Beispiel | Mass.-% Prod. in Wasser | Anpreß-kraft (N) | Reibungs-kraft (N) | Temperatur °C |
|---|---|---|---|---|
| 13 | 1 | 13000 | 1600 | 77 |
| | 2 | 19500 | >3500 | 89 |
| | 5 | >20000 | 1590 | 84 |
| 14 | 1 | >20000 | 2030 | 89 |
| | 2 | >20000 | 2100 | 90 |
| | 5 | >20000 | 2300 | 93 |
| 15 | 1 | >20000 | 1700 | 80 |
| | 2 | >20000 | 2040 | 89 |
| | 5 | >20000 | 1980 | 89 |
| 16 | 1 | >20000 | 1980 | 86 |
| | 2 | >20000 | 2090 | 86 |
| | 5 | >20000 | 2010 | 90 |
| 17 | 1 | >20000 | 2050 | 78 |
| | 2 | >20000 | 2000 | 83 |
| | 5 | >20000 | 2000 | 84 |
| 18 | 1 | >20000 | 1650 | 77 |
| | 2 | >20000 | 1630 | 77 |
| | 5 | >20000 | 1490 | 76 |

Tabelle 2 : Reichert-Reibverschleiß-Test (bei 15 N Belastung)

| Beispiel | Mass.-% Prod. in Wasser | Spez. Filmbelastbarkeit ($N/cm^2$) |
|---|---|---|
| - | 0 | 1050 |
| 1 | 1<br>2<br>5 | 2850<br>9090<br>9670 |
| 2 | 1<br>2<br>5 | 6470<br>7140<br>7030 |
| 3 | 1<br>2<br>5 | 3870<br>5070<br>10050 |
| 4 | 1<br>2<br>5 | 11300<br>7990<br>11200 |
| 5 | 1<br>2<br>5 | 3630<br>4270<br>6790 |
| 6 | 1<br>2<br>5 | 11580<br>21030<br>20480 |
| 7 | 1<br>2<br>5 | 2270<br>2920<br>9850 |
| 8 | 1<br>2<br>5 | 2100<br>2770<br>6270 |
| 9 | 1<br>2<br>5 | 1920<br>1980<br>3030 |
| 10 (zum Vergleich) | 1<br>2<br>5 | 2420<br>2640<br>4340 |
| 11 | 1<br>2<br>3 | 13680<br>15030<br>9480 |
| 12 | 1<br>2<br>5 | 3720<br>11260<br>10470 |

Tabelle 2 : Reichert-Reibverschleiß-Test (bei 15 N Belastung) (Fortsetzung)

| Beispiel | Mass.-% Prod. in Wasser | spez. Filmbelastbarkeit (N/cm²) |
|---|---|---|
| 13 | 1<br>2<br>5 | 3410<br>5300<br>18110 |
| 14 | 1<br>2<br>5 | 3270<br>4280<br>7800 |
| 15 | 1<br>2<br>5 | 2590<br>6320<br>4460 |
| 16 | 1<br>2<br>5 | 3070<br>2940<br>3870 |
| 17 | 1<br>2<br>5 | 2520<br>3000<br>3570 |
| 18 | 1<br>2<br>5 | 2590<br>3090<br>4000 |

In Tabelle 3 ist zum Vergleich das Reibungsverhalten von Leitungswasser (1.), einem handelsüblichen HF-C-Hydraulikfluid (2.) sowie von handelsüblichen Kühlschmierstoffen (Gebrauchslösungen, 2 %ig) — Mineralölemulsion (3.), vollsynthetisches Produkt (4.) — zusammengestellt.

Tabelle 3

| | Almen-Wieland-Test | | | Reichert-Test |
|---|---|---|---|---|
| | Schweiß-kraft ( N) | Reibungs-kraft(N) | Temp. (°C) | bei 15 N Belastung spez. Belastbarkeit N/cm² |
| 1. Wasser | 500 | * | 25 | 1050 |
| 2. HF-C-Fluid handelsübl. | 20000 | 2700 | 94 | 3443 |
| 3. KS-Gebrauchs-lösung (Mineralölemulsion) | 6500 | 1400 | 46 | 1230 |
| 4. KS-Gebrauchs-lösung (vollsynth.Prod.) | 3500 | 1450 | 42 | 1950 |

* nicht bestimmbar

**Patentansprüche**

1. Mit Wasser mischbare Polyurethane mit Molmassen im Bereich von 800 bis 100 000, erhältlich durch eine Polyadditionsreaktion aromatischer, cycloaliphatischer und/oder aliphatischer Polyisocyanate mit

a) 30 bis 95 Mol-% eines oder mehrerer schwefelverbrückter aliphatischen Dialkohole der Formel

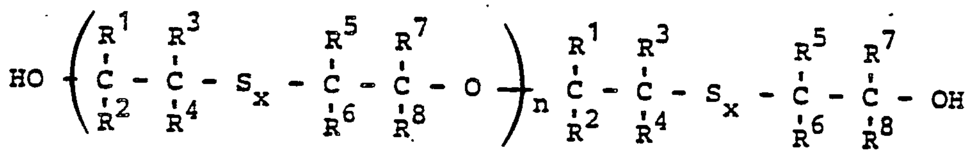

in der

$R^1$ bis $R^8$ gleich oder verschieden sind und Wasserstoff oder einen Alkylrest mit 1 bis 10 Kohlenstoffatomen bedeuten,

n für eine Zahl von 0 bis 20 steht und

x eine Zahl zwischen 1,5 und 4 (mittlere Anzahl der Schwefelatome) bedeutet,

in Gegenwart von

b) 1,4 bis 20 Mol-% eines Polyethylenglykols und/oder

c) 4,6 bis 70 Mol-% eines mindestens eine anionische Gruppe tragenden Dialkohols und/oder mindestens eines eine anionische Gruppe tragenden Mono- oder Diamins, und

d) 0 bis 40 Mol-% sonstiger cycloaliphatischer, araliphatischer oder heterocyclischer Dialkohole und/oder aromatischer, cycloaliphatischer oder araliphatischer Diamine, die gegebenenfalls unter 20 Mol-% Monoamine enthalten können die Summe von a) bis d) 100 Mol-% ergibt.

2. Polyurethane nach Anspruch 1, dadurch gekennzeichnet, daß schwefelverbrückte aliphatische Dialkohole der Formel

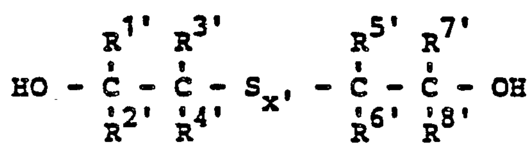

in der

$R^{1'}$ bis $R^{8'}$ Wasserstoff, Methyl oder Ethyl bedeuten und

x' eine Zahl zwischen 1,9 und 3,1 bedeutet,

eingesetzt werden.

3. Polyurethane nach den Ansprüchen 1 bis 2, dadurch gekennzeichnet, daß sie durch Umsetzung der Komponenten a) bis d) mit 85 bis 115 Mol-% eines Polyisocyanats hergestellt wurden.

4. Verschleißschutz-Additiv, enthaltend mit Wasser mischbare Polyurethane mit Molmassen im Bereich von 800 bis 100 000, erhältlich durch eine Polyadditionsreaktion aromatischer, cycloaliphatischer und/oder aliphatischer Polyisocyanate mit

a) 30 bis 95 Mol-% eines oder mehrerer schwefelverbrückter aliphatischen Dialkohole der Formel

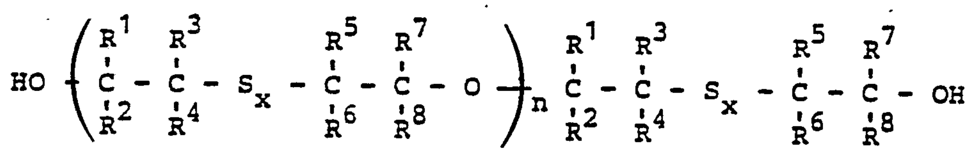

in der

$R^1$ bis $R^8$ gleich oder verschieden sind und Wasserstoff oder einen Alkylrest mit 1 bis 10 Kohlenstoffatomen bedeuten und

n für eine Zahl von 0 bis 20 steht und

x eine Zahl zwischen 1,5 und 4 (mittlere Anzahl der Schwefelatome) bedeutet,

in Gegenwart von

b) 1,4 bis 20 Mol-% eines Polyethylenglykols und/oder

c) 4,6 bis 70 Mol-% eines mindestens eine anionische Gruppe tragenden Dialkohols und/oder mindestens eines eine anionische Gruppe tragenden Mono- oder Diamins, und

d) 0 bis 40 Mol-% sonstiger cycloaliphatischer, araliphatischer oder heterocyclischer Dialkohole und/oder aromatischer, cycloaliphatischer oder araliphatischer Diamine, die gegebenenfalls bis zu 20 Mol-% Monoamine enthalten können, wobei die Summe von a) bis d) 100 Mol-% ergibt.

5. Verwendung von Verschleißschutz-Additiven nach Anspruch 4 in wäßrigen Hydraulikflüssigkeiten und Kühlschmierstoffkonzentraten.

## Claims

1. Water-miscible polyurethanes with molecular weights in the range 800 to 100,000, obtainable by a polyaddition reaction of aromatic, cycloaliphatic and/or aliphatic polyisocyanates with

a) 30 to 95 mol % of one or more sulphur-bridged aliphatic dialcohols of the formula

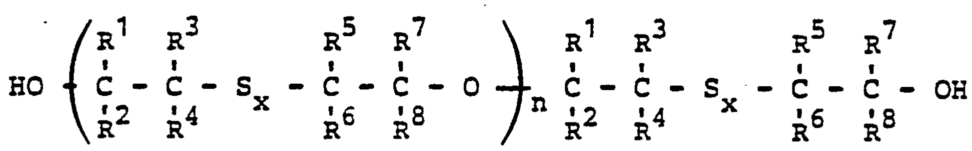

in which

$R^1$ to $R^8$ are identical or different and denote hydrogen or an alkyl radical with 1 to 10 carbon atoms,

n represents a number from 0 to 20 and

x denotes a number between 1.5 and 4 (average number of sulphur atoms),

in the presence of

b) 1.4 to 20 mol % of a polyethylene glycol and/or

c) 4.6 to 70 mol % of a dialcohol carrying at least one anionic group and/or at least one mono- or diamine carrying an anionic group, and

d) 0 to 40 mol % of other cycloaliphatic, araliphatic or heterocyclic dialcohols and/or aromatic, cycloaliphatic or araliphatic diamines, which can optionally contain less than 20 mol % of monoamines, the sum of a) to d) being 100 mol %.

2. Polyurethanes according to Claim 1, characterised in that sulphur-bridged aliphatic dialcohols of the formula

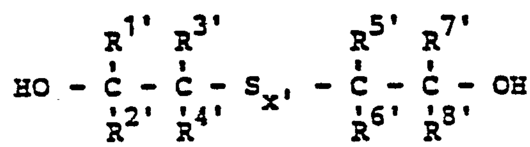

in which

$R^{1'}$ and $R^{8'}$ denote hydrogen, methyl or ethyl and

x' denotes a number between 1.9 and 3.1, are used.

3. Polyurethanes according to Claims 1 to 2, characterised in that they have been produced by reacting components a) to d) with 85 to 115 mol % of a polyisocyanate.

4. Anti-wear additive containing water-miscible polyurethanes with molecular weights in the range 800 to 100,000, obtainable by a polyaddition reaction of aromatic, cycloaliphatic and/or aliphatic polyisocyanates with

a) 30 to 90 mol % of one or more sulphur-bridged aliphatic dialcohols of the formula

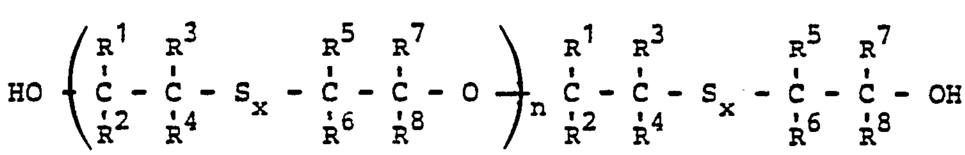

in which

$R^1$ to $R^8$ are identical of different and denote hydrogen or an alkyl radical with 1 to 10 carbon atoms and

n represents a number from 0 to 20 and

x denotes a number between 1.5 and 4 (average number of sulphur atoms),

in the presence of

b) 1.4 to 20 mol % of a polyethylene glycol and/or

c) 4.6 to 70 mol % of a dialcohol carrying at least one anionic group and/or at least one mono- or diamine carrying an anionic group, and

d) 0 to 40 mol % of other cycloaliphatic, araliphatic or heterocyclic dialcohols and/or aromatic,

cycloaliphatic or araliphatic diamines which can optionally contain up to 20 mol % monoamines, the sum of a) to d) being 100 mol %.

5. Use of anti-wear additives according to Claim 4 in aqueous hydraulic fluids and cooling lubricant concentrates.

**Revendications**

1. Polyuréthannes miscibles à l'eau, ayant des masses moléculaires dans l'intervalle de 800 à 100 000, pouvant être obtenus par une réaction de polyaddition de polyisocyanates aromatiques, cycloaliphatiques et/ou aliphatiques avec

a) 30 à 95 moles % d'un ou plusieurs dialcools aliphatiques pontés par du soufre, de formule

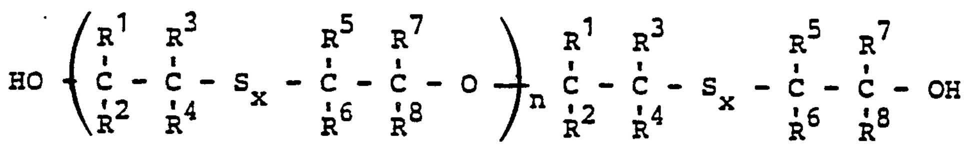

dans laquelle

$R^1$ à $R^8$ sont identiques ou différents et représentent de l'hydrogène ou un reste alkyle ayant 1 à 10 atomes de carbone,

n est un nombre de 0 à 20 et

x est un nombre compris entre 1,5 et 4,

en présence,

b) de 1,4 à 20 moles % d'un polyéthylèneglycol et/ou

c) de 4,6 à 70 moles % d'un dialcool portant au moins un groupe anionique et/ou d'au moins une monoamine ou diamine portant un groupe anionique et

d) de 0 à 40 moles % d'autres dialcools cycloaliphatiques, araliphatiques ou hétérocycliques et/ou d'autres diamines aromatiques, cycloaliphatiques ou araliphatiques qui peuvent contenir le cas échéant moins de 20 moles % de monoamines, la somme de a) à d) étant égale à 100 moles %.

2. Polyuréthannes suivant la revendication 1, caractérisés en ce qu'on utilise des dialcools aliphatiques pontés par du soufre, de formule

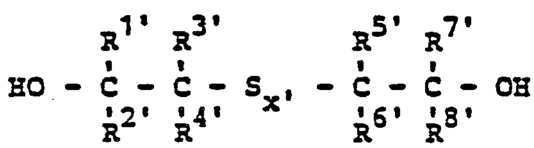

dans laquelle

$R^{1'}$ à $R^{8'}$ représentent de l'hydrogène, un groupe méthyle ou un groupe éthyle et

x' est un nombre compris entre 1,9 et 3,1.

3. Polyuréthannes suivant les revendications 1 et 2, caractérisés en ce qu'ils ont été obtenus par réaction des composants a) à d) avec 85 à 115 moles % d'un polyisocyanate.

4. Additif anti-usure, contenant des polyuréthannes miscibles à l'eau, ayant des masses moléculaires comprises dans l'intervalle de 800 à 100 000, pouvant être obtenu par réaction de polyaddition de polyisocyanates aromatiques, cycloaliphatiques et/ou aliphatiques avec

a) 30 à 95 moles % d'un ou plusieurs dialcools aliphatiques pontés par du soufre, de formule

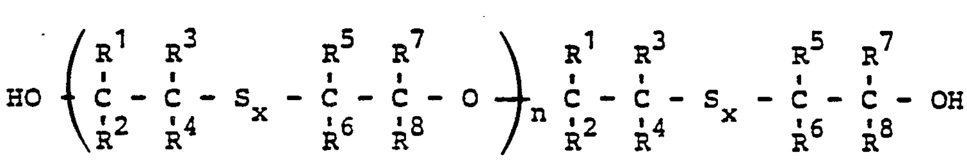

dans laquelle

$R^1$ à $R^8$ sont identiques ou différents et représentent de l'hydrogène ou un reste alkyle ayant 1 à 10 atomes de carbone,

n est un nombre de 0 à 20 et

x est un nombre compris entre 1,5 et 4 (nombre moyen d'atomes de soufre),

en présence,

b) de 1,4 à 20 moles % d'un polyéthylèneglycol et/ou

c) de 4,6 à 70 moles % d'un dialcool portant au moins un groupe anionique et/ou d'au moins une monoamine ou diamine portant un groupe anionique et

d) de 0 à 40 moles % d'autres dialcools cycloaliphatiques, araliphatiques ou hétérocycliques et/ou d'autres diamines aromatiques, cycloaliphatiques ou araliphatiques qui peuvent contenir le cas échéant moins de 20 moles % de monoamines, la somme de a) à d) étant égale à 100 moles %.

5. Utilisation d'additifs anti-usure suivant la revendication 4 dans des liquides hydrauliques et des concentrés réfrigérants-lubrifiants aqueux.